# EUROPÄISCHE PATENTSCHRIFT

(11) **EP 1 246 874 B1**
(45) Veröffentlichungstag und Bekanntmachung des Hinweises auf die Patenterteilung: **24.01.2007**
(21) Anmeldenummer: 00990668.6
(22) Anmeldetag: 07.12.2000
(51) Int. Cl.: C09D 5/10, C09D 5/44

(54) **BESCHICHTUNG, ENTHALTEND KOLLOIDAL VERTEILTES METALLISCHES BISMUT**
COATING THAT CONTAINS A COLLOIDALLY DISPERSED METALLIC BISMUTH
REVETEMENT CONTENANT DU BISMUTH METALLIQUE REPARTI DE MANIERE COLLOIDALE

(30) Priorität: 14.01.2000 DE 10001222
(43) Veröffentlichungstag der Anmeldung: 09.10.2002
(73) Patentinhaber: BASF Coatings AG, 48165 Münster (DE)
(72) Erfinder: REUTER, Hardy, 48167 Münster (DE); GROSSE-BRINKHAUS, Karl-Heinz, 48301 Nottuln (DE); HEIMANN, Ulrich, 48165 Münster (DE); SCHEMSCHAT, Dagmar, 48165 Münster (DE); DÖRING, Rolf, 48301 Nottuln (DE); JOUCK, Walter, 48167 Münster (DE)
(86) Internationale Anmeldenummer: PCT/EP2000/012329
(87) Internationale Veröffentlichungsnummer: WO 2001/051570

(56) Entgegenhaltungen:
- EP-A- 0 390 216
- WO-A-00/37571
- GB-A- 1 260 492
- US-A- 4 134 865

## Beschreibung

Die vorliegende Erfindung betrifft eine neue Beschichtung, die aus einem thermisch härtbaren, wäßrigen Beschichtungsstoff auf organischer Basis herstellbar ist und kolloidal verteiltes metallisches Bismut enthält. Außerdem betrifft die vorliegende Erfindung die Verwendung der neuen Beschichtung als. Korrosionsschutzschicht auf metallischen Substraten. Des weiteren betrifft die vorliegende Erfindung ein Verfahren zur Herstellung der neuen Beschichtung.

Korrosionsschutzschichten, die aus einem thermisch härtbaren, wäßrigen Beschichtungsstoff auf organischer Basis, speziell auf der Basis von Elektrotauchlacken, herstellbar sind und Metallstäube, insbesondere Zinkstaub, enthalten, sind aus dem Artikel von M. Leclerq, "Eigenschaften von Zinkstaubpigmenten", Farbe + Lack, Band 97, 1991, Heft 5, Seiten 408 und folgende, bekannt. Die Metallstäube werden mit den thermisch härtbaren, wäßrigen Beschichtungsstoffen vor der Herstellung der Korrosionsschutzschichten vermischt und nicht erst bei deren Herstellung erzeugt. Die Zugabe der Metallstäube stellt einen zusätzlichen Verfahrenschritt dar, was technisch und wirtschaftlich von Nachteil ist. Außerdem ist die Handhabung von Metallstäuben sicherheitstechnisch problematisch.

Aus der deutschen Patentschrift DE 37 26 635 A1 ist eine Beschichtung bekannt, die magnetische Eisenoxidpartikel enthält und aus Elektrotauchlacken herstellbar ist. Die Verwendung von Bismutpartikeln geht aus dieser Patentschrift nicht hervor.

Die Verwendung von Bismutverbindungen bei der Härtung von thermisch härtbaren Beschichtungsstoffen auf organischer Basis ist aus den Patentschriften DE 37 09 631 A1, EP 0 337 422 A3, EP 0 138 193 B1 oder US 5,405,701 A bekannt. Aus den Patentschriften geht nicht hervor, daß sich bei der thermischen Härtung der betreffenden Beschichtungsstoffe metallisches Bismut bildet.

Die Verwendung von Bismutsalzen als Katalysatoren für die thermische Härtung von kataphoretischen Elektrotauchlacken, die wasserlösliche oder -dispergierbare, hydroxylgruppenhaltige Polyamine als Bindemittel und blockierte Polyisocyanate als Vernetzungsmittel enthalten, sind aus den Patentschriften DE 44 23 139A1, EP 0 690 106 A1, EP 0 337 422 A1, DE 43 30 002 Cl, DE 44 34 593 A1, EP 0 739 891 B1, US 5,702,581 A, WO 95/07319, WO 95/33083,WO 96/10057, EP 0 642 558 B1, EP 0 717 794 B1, US 5,554,7 A, WO 93/24578, WO 95/07377, US 4,617,331 A, US 5,908,912 A,WO 98/10024, EP 0 264 834 B1, DE 25 41 234 A1 oder EP 0 509 437 A1 bekannt.

Auf Seite 2, Zeilen 29 bis 31, der europäischen Patentschrift EP 0 642 558 B1 wird angegeben, daß die Auswahl der in kataphoretisch abscheidbaren Elektrotauchlacken verwendbaren Bismutverbindungen sehr eingeschränkt ist. So sollen die leichter verfügbaren Bismutsalze längerkettiger Säuren wie Octansäure oder Neodecansäure beim Einsatz in kationischen Bindemitteln durch ölartige Ausscheidungen Störungen im Lackfilm hervorrufen. Es wird somit von der Verwendung solcher Bismutsalze nachgerade abgeraten.

Die Bildung von kolloidal verteiltem metallischem Bismut bei der Herstellung von Beschichtungen aus diesen bekannten kataphoretischen Elektrotauchlacken wird in den vorstehend aufgeführten Patentschriften nicht beschrieben.

Die bekannten kataphoretischen Elektrotauchlacke weisen eine gute Naßhaftung und einen guten Umgriff auf. Sie lassen sich bei vergleichsweise niedrigen Temperaturen thermisch härten. Die resultierenden Beschichtungen weisen gute Korrosionsschutzeigenschaften auf. Für die Lösung besonders schwerwiegender Korrosionsprobleme, wie sie beispielsweise bei der Dauerbelastung metallischer Substrate durch salzhaltige und/oder saure Aerosole und/oder salzhaltiges und/oder saures Spritzwasser auftreten, müssen indes häufig noch spezielle Korrosionsschutzpigmente zugesetzt werden, was auch als "schwerer Korrosionsschutz" bezeichnet wird. Besonders wirksame Korrosionsschutzpigmente enthalten i. d. R. ökologisch bedenkliche Schwermetalle wie Zinn, Chrom oder Blei, was bei Herstellern und die Anwendern von kataphoretischen Elektrotauchlacken zunehmend zu sicherheitstechnischen Problemen in der Produktion, der Verarbeitung und der Entsorgung führt.

Es besteht daher ein wachsender Bedarf an Beschichtungen, die auch ohne die Anwendung ökologisch und sicherheitstechnisch bedenklicher Metallstäube oder Korrosionsschutzpigmente unter verschärften Bedingungen einen sicheren schweren Korrosionsschutz gewährleisten, ohne daß die vorstehend beschriebenen Vorteile der bekannten kataphoretischen Elektrotauchlacke verlorengehen.

Aufgabe der vorliegenden Erfindung ist es, Beschichtungen bereitzustellen, die diesen Bedarf erfüllen.

Demgemäß wurde die neue Beschichtung gefunden, die aus einem thermisch härtbaren, wäßrigen Beschichtungsstoff auf organischer Basis herstellbar ist und, bezogen auf ihre Gesamtmenge, 0,01 bis 2,5 Gew.-% kolloidal verteiltes metallisches Bismut enthält.

Im folgenden wird die neue Beschichtung als "erfindungsgemäße Beschichtung" bezeichnet.

Weitere Erfindungsgegenstände gehen aus der Beschreibung hervor.

Im Hinblick auf den Stand der Technik war es überraschend und für den Fachmann nicht vorhersehbar, daß die der vorliegenden Erfindung zugrundeliegende Aufgabe durch die Verwendung von kolloidal verteiltem metallischem Bismut in einer Beschichtung auf organischer Basis gelöst werden konnte. Noch mehr überraschte, daß sich das kolloidal verteilte metallische Bismut in vergleichsweise einfacher Weise bei der Applikation und der thermischen Härtung wäßriger Beschichtungsstoffe auf organischer Basis auf elektrisch leitenden und elektrisch nicht leitenden Substraten erzeugen läßt, wobei die Bismutsalze, von denen erfindungsgemäß ausgegangen wird, auch noch die Rolle der Katalysatoren der thermischen Härtung übemehmen. Des weiteren überraschte, daß sich ein schwerer Korrosionsschutz bereits mit vergleichsweise geringen Mengen an metallischem Bismut realisieren läßt.

Der erfindungswesentliche Bestandteile der erfindungsgemäßen Beschichtung ist das kolloidal verteilte metallische Bismut. Zu dem Begriff "kolloidal" wird auf Römpp Lexikon Lacke und Druckfarben, Georg Thieme Verlag, Stuttgart, New York, »Kolloide«, Seiten 327 und 328 verwiesen. Die metallische Natur des Bismuts kann anhand der Röntgenbeugung nach dem Debye-Scherrer-Verfahren anhand sechs charakteristischer Linien im Röntgenspektrum, die auch die drei intensivsten umfassen, nachgewiesen werden. Gemäß der Zusammenstellung von R. Sailer und G. McCarthy, North Dakota State University, Fargo (1992), 1998 JCPDS - International Centre for Diffraction Data, sind dies:

| **Netzebenenabstand d (nm)** | **Intensität** |
|---|---|
| 32,8 | ssss |
| 22,73 | ss |
| 23,69 | s |
| 18,686 | |
| 16,505 | |
| 15,565 | |

| | |
|---|---|
| ssss - sss = sehr sehr stark; ss = sehr stark; s = stark; | |

Der Gehalt der erfindungsgemäßen Beschichtungen an kolloidal verteiltem metallischem Bismut liegt bei, jeweils bezogen auf die erfindungsgemäße Beschichtung, 0,01 bis 2,5, bevorzugt 0,02 bis 2,3 und insbesondere 0,05 bis 2,2 Gew.-%.

Die Schichtdicke der erfindungsgemäßen Beschichtung kann ebenfalls breit variieren und richtet sich vor allem danach, welche Schichtdicke im Einzelfall für einen sehr guten schweren Korrosionsschutz notwendig ist. Vorzugsweise liegt die Schichtdicke bei 2,0 bis 200, bevorzugt 5 bis 150 und insbesondere 10 bis 100 µm.

Die erfindungsgemäße Beschichtung ist herstellbar aus einem thermisch härtbaren, wäßrigen Beschichtungsstoff auf organischer Basis.

Zu diesem Zweck wird der Beschichtungsstoff in üblicher und bekannter Weise, vorzugsweise durch Spritzen, Rakeln, Streichen, Gießen, Tauchen, Tränken, Träufeln oder Walzen, als Naßschicht auf elektrisch leitfähigen und elektrisch nicht leitfähigen Substraten abgeschieden. Oder aber der Beschichtungsstoff wird in üblicher und bekannter Weise kataphoretisch auf elektrisch leitfähigen Substraten als Naßschicht abgeschieden. Geeignete Verfahren zur kataphoretischen Abscheidung von Beschichtungsstoffen sind aus den eingangs zitierten Patentschriften bekannt.

Die Schichtdicke der Naßschicht richtet sich vor allem nach der Schichtdicke, die die hieraus hergestellte erfindungsgemäße Beschichtung haben soll. Sie kann daher in Abhängigkeit von ihrem jeweiligen Feststoffgehalt sehr breit variieren.

Beispiele geeigneter elektrisch nicht leitfähiger Substrate sind Formteile aus Glas, Keramik, Holz und/oder Kunststoffen.

Beispiele geeigneter elektrisch leitfähiger Substrate sind Formteile aus Metallen und/oder Kunststoffen, die elektrisch leitfähige Pigmente enthalten.

Die erfindungsgemäßen Beschichtungen eignen sich hierbei vor allem für den Korrosionsschutz von Formteilen aus Metallen, insbesondere von Automobilkarosserien oder Coils, Emballagen und anderer Teile für den privaten oder industriellen Gebrauch wie Möbel aus Metall, Radiatoren, Haushaltsgeräte, Kleinteile aus Metall, Radkappen oder Felgen.

Die thermische Härtung der applizierten Naßschichten kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Naßschichten oder zum Verdunsten von flüchtigen Bestandteilen wie Lösemittel oder Wasser. Die Ruhezeit kann durch die Anwendung erhöhter Temperaturen bis 100 °C unterstützt und/oder verkürzt werden, sofern hierbei keine Schädigungen oder Veränderungen der applizierten Naßschichten eintreten, etwa eine vorzeitige Vemetzung.

Die thermische Härtung der applizierten Naßschichten erfolgt nach den üblichen und bekannten Methoden wie Erhitzen in einem Umluftofen oder Bestrahlen mit IR-Lampen. Vorteilhafterweise erfolgt die thermische Härtung bei einer Temperatur >90 °C, bevorzugt 90 bis 200 °C, besonders bevorzugt 110 bis 190°C und insbesondere 120 bis 180 °C während einer Zeit von 1 min bis zu 2 h, besonders bevorzugt 2 min bis zu 1 h und insbesondere 3 min bis 30 min.

Im Grunde kann der erfindungsgemäß zu verwendende thermisch härtbare, wäßrige Beschichtungsstoff auf organischer Basis von beliebiger stofflicher Zusammensetzung sein, solange er sich in der vorstehend beschriebenen Weise verarbeiten läßt und hierbei die vorstehend beschriebenen erfindungsgemäßen Beschichtungen liefert. Im Rahmen der vorliegenden Erfindung unterstreicht der Begriff "organische Basis", daß das Eigenschaftsprofil des Beschichtungsstoffs und der hieraus hergestellten erfindungsgemäßen Beschichtungen vor allem von den organischen Bestandteilen bestimmt wird, wobei die anorganischen Bestandteile dieses Eigenschaftsprofil in geeigneter Weise variieren.

Besonders vorteilhafte erfindungsgemäße Beschichtungen werden in besonders zuverlässiger und eleganter Weise erhalten, wenn der thermisch härtbare, wäßrige Beschichtungsstoff auf organischer Basis
A) mindestens ein wasserlösliches oder -dispergierbares, hydroxylgruppenhaltiges, mit Ameisensäure neutralisiertes oligomeres und/oder polymeres Polyamin als Bindemittel,
B) mindestens ein Salz von Bismut und mindestens einer Alkanmonocarbonsäure mit mindestens 5 Kohlenstoffatomen im Molekül als Katalysator der thermischen Vernetzung,
C) mindestens ein blockiertes Polyisocyanat als Vernetzungsmittel und
D) mindestens einen Zusatzstoff
enthält.

Besondere Vorteile resultieren, wenn diese wäßrigen Beschichtungsstoffe als kataphoretisch abscheidbare Elektrotauchlacke (ETL) vorliegen. Weitere Vorteile resultieren, wenn der Feststoffgehalt der ETL bei 5,0 bis 50 Gew.-% liegt.

Beispiele geeigneter Polyamine (A) sind aus den Patentschriften EP 0 082 291 A1, EP 0 234 395 A1, EP 0 227 975 A1, EP 0 178 531, EP 333 327 A1, EP 0 310 971 A1, EP 0 337 422 A2, EP 0 456 270 A1, 3,922,253 A1, EP 0 261 385 A1, EP 0 245 786 A1, DE 33 24 211 A1, EP 0 414 199 A1 oder EP 476 514 A1 bekannt. Hierbei handelt es sich vorzugsweise um primäre, sekundäre, tertiäre oder quaternäre Ammoniumgruppen enthaltende Harze (A) mit Aminzahlen vorzugsweise zwischen 20 und 250 mg KOH/g und einem gewichtsmittleren Molekulargewicht vongsweise 300 bis 10.000 Dalton. Insbesondere werden Amino(meth)acrylatharze, Aminoepoxidharze, Aminoepoxidharze mit endständigen Doppelbindungen, Aminopolyurethanharze, aminogruppenhaltige Polybutadienharze oder modifizierte Epoxidharz-Kohlendioxid-Amin-Umsetzungsprodukte angewandt.

Erfindungsgemäß werden die Aminoepoxidharze, wie sie aus Epoxidharzen und polyfunktionellen Aminen erhältlich sind, ganz besonders bevorzugt verwendet.

Erfindungsgemäß sind die Polyamine (A) mit Ameisensäure partiell oder vollständig neutralisiert. Der Neutralisationsgrad richtet sich vor allem nach der Menge an Ameisensäure, die notwendig ist, um die Bindemittel (A) wasserlöslich oder -dispergierbar zu machen.

Der Anteil der Polyamine (A) an den erfindungsgemäß zu verwendenden ETL kann sehr breit variieren. Erfindungsgemäß ist es von Vorteil, die Polyamine (A) in den Mengen anzuwenden, wie sie aus den vorstehend aufgeführten Patentschriften bekannt sind.

Die erfindungsgemäß zu verwendenden Beschichtungsstoffe, insbesondere die ETL, enthalten mindestens ein Salz (B) von Bismut mit mindestens einer Alkanmonocarbonsäure mit mindestens fünf Kohlenstoffatomen im Molekül. Erfindungsgemäß dient das Salz (B) als Katalysator der thermischen Vernetzung und als Lieferant des erfindungswesentlichen kolloidal verteilten metallischen Bismuts der erfindungsgemäßen Beschichtungen. Es wird daher in den erfindungsgemäß zu verwendenden Beschichtungsstoffen in einer Menge angewandt, die zum einen die katalytische Wirkung sicherstellt und zum anderen den vorstehend beschriebenen Gehalt an metallischem Bismut liefert. Der Fachmann kann daher die jeweils geeignete Menge an Salz (B) in einfacher Weise gegebenenfalls unter Zuhilfenahme einfacher orientierender Vorversuche leicht ermitteln.

Beispiele geeigneter Alkanmonocarbonsäure sind n-Valeriansäure, Isovaleriansäure, 2-Methylbuttersäure, Pivalinsäure, n-Hexansäure, n-Heptansäure, n-Octansäure, 2-Ethylhexansäure, Nonansäure, Caprinsäure, Neodecansäure und/oder Laurinsäure, insbesondere 2-Ethylhexansäure. Es können auch noch höhere Alkanmonocarbonsäuren vorzugsweise gemeinsam mit den vorstehend beschriebenen Alkanmonocarbonsäuren angewandt werden.

Erfindungsgemäß ist es von Vorteil, wenn die Salze (B) in einem Überschuß der vorstehend beschriebenen Alkanmonocarbonsäuren gelöst vorliegen. Weitere Vorteile resultieren, wenn jeweils die Alkanmonocarbonsäure verwendet wird, die auch das Anion des Salzes (B) bildet. Vorzugsweise liegt der Gehalt der resultierenden Mischung an Salz (B), bezogen auf die Mischung, bei 10 bis 95, bevorzugt 15 bis 90 und insbesondere 20 bis 85 Gew.-%.

Die vorteilhafte Wirkung der erfindungsgemäß zu verwendenden Salze (B) ist im Hinblick auf die ihnen nachgesagte Neigung, durch ölartige Ausscheidungen Störungen in den Beschichtungen hervorzurufen, besonders überraschend.

Die erfindungsgemäß zu verwendenden Beschichtungsstoffe, insbesondere die ETL, enthalten mindestens ein blockiertes Polyisocyanat als Vernetzungsmittel (C).

Beispiele geeigneter Vernetzungsmittel (C) leiten sich ab von sogenannten Lackpolyisocyanaten, mit aliphatisch, cycloaliphatisch, araliphatisch und/oder aromatisch gebundenen, blockierten Isocyanatgruppen.

Beispiele geeigneter Lackpolyisocyanate sind Diisocyanate, insbesondere Hexamethylendüsocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan, 1-Isocyanato-2-(3-isocyanatopropyl)cyclohexan, Toluylendiisocyanat, Xylylendiisocyanat, Bisphenylendiisocyanat, Naphthylendiisocyanat oder Diphenylmethandiisocyanat oder Mischungen aus diesen Polyisocyanaten.

Besonders bevorzugt werden Lackpolyisocyanate verwendet, die im statistischen Mittel mit mehr als 2, insbesondere 2,5 bis 5 Isocyanatgruppen, pro Molekül enthalten und Viskositäten von 100 bis 10.000, vorzugsweise 100 bis 5000 und insbesondere 100 bis 2000 mPas (bei 23°C) aufweisen. Außerdem können sie in üblicher und bekannter Weise hydrophil oder hydrophob modifiziert sein.

Vorzugsweise werden sie aus dem vorstehend genannten Diisocyanaten hergestellt und weisen Isocyanurat-, Biuret-, Allophanat-, Iminooxadiazindion-, Urethan-, Harnstoff- und/oder Uretdiongruppen auf. Urethangruppen aufweisende Polyisocyanate werden beispielsweise durch Umsetzung eines Teils der Isocyanatgruppen der Diisocyanate mit Polyolen, wie z.B. Butyldiglykol, Trimethylolpropan und/oder Glycerin, erhalten. Weitere Beispiele geeigneter Herstellungsverfahren sind aus den Patentschriften CA-A-2,163,591, US-A-4,419,513, US-A-4,454,317, EP-A-0 646 608, US-A-4,801,675, EP-A-0 183 976, DE-A-40 15 155, EP-A-0 303 150, EP-A- 0 496 208, EP-A-0 524 500, EP-A-0 566 037, US-A-5,258,482, US-A-5,290,902, EP-A-0 649 806, DE-A-42 29 183 oder EP-A-0 531 820 bekannt.

Beispiele für geeignete Blockierungsmittel zur Herstellung der blockierten Polyisocyanate (B) sind die aus der US-Patentschrift US-A-4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Trimethylolpropan, Glycerin, Butyldiglykol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
vvii) Gemische dieser Blockierungsmittel, insbesondere Dimethylpyrazol und Triazole, Malonester und Acetessigsäureester, Dimethylpyrazol und Succinimid oder Butyldiglykol und Trimethylolpropan.

Der Anteil der Vernetzungsmittel (C) an den erfindungsgemäß zu verwendenden ETL kann sehr breit variieren und richtet sich vor allem nach der Funktionalität des Bindemittels (A). Erfindungsgemäß ist es von Vorteil, die Vernetzungsmittel (C) in den Mengen anzuwenden, wie sie aus den vorstehend aufgeführten Patentschriften bekannt sind. Der Fachmann kann daher die Menge der Vernetzungsmittel (B) aufgrund seines allgemeinen Fachwissens, gegebenenfalls unter Zuhilfenahme einfacher orientierender Versuche ermitteln.

Des weiteren enthalten die erfindungsgemäß zu verwendenden Beschichtungsstoffe, insbesondere die ETL, mindestens einen Zusatzstoff (D).

Beispiele für geeignete Zusatzstoffe (D) sind zusätzliche Vernetzungsmittel (D) wie alle bekannten aliphatischen und/oder cycloaliphatischen und/oder aromatischen Polyepoxide, Tris(alkoxycarbonylamino)triazine (TACT), Aminoplastharze, beispielsweise Melamin-, Guanamin-, Benzoguanamin- oder Harnstoffharze, beta-Hydroxyalkylamide oder Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden.

Weitere Beispiele geeigneter Zusatzstoffe (D) sind
- organische und/oder anorganische Pigmente, Korrosionsschutzpigmente und/oder Füllstoffe wie Calciumsulfat, Bariumsulfat, Silikate wie Talk oder Kaolin, Kieselsäuren, Oxide wie Aluminiumhydroxid oder Magnesiumhydroxid, Nanopartikel, organische Füllstoffe wie Textilfasern, Cellulosefasern, Polyethylenfasem oder Holzmehl, Titandioxid, Ruß, Eisenoxid, Zinkphosphat oder Bleisilikat; diese Additive können auch über Pigmentpasten in die erfindungsgemäße ETL eingearbeitet werden, wobei als Reibharze die vorstehend beschriebenen Bindemittel (A) in Betracht kommen;
- Radikalfänger;
- organische Korrosionsinhibitoren;
- zusätzliche Katalysatoren für die Vernetzung wie anorganische und organische Salze und Komplexe des Zinns, Bleis, Antimons, Eisens oder Mangans, vorzugsweise organische Salze und Komplexe des Zinns, insbesondere Dibutylzinnoxid oder Dibutylzinndilaurat ;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufmittel;
- filmbildende Hilfsmittel wie Cellulose-Derivate;
- Flammschutzmittel;
- organische Lösemittel;
- niedermolekulare, oligomere und hochmolekulare Reaktivverdünner, die an der thermischen Vernetzung teilnehmen können, insbesondere Polyole wie Tricyclodecandimethanol, dendrimere Polyole, hyperverzweigte Polyester, Polyole auf der Basis von Metatheseoligomeren oder verzweigten Alkanen mit mehr als acht Kohlenstoffatomen im Molekül;
- Antikratermittel; oder
- Polyvinylalkohole.

Weitere Beispiele geeigneter Lackadditive werden in dem Lehrbuch "Lackadditive" von Johan Bieleman, Wiley-VCH, Weinheim, New York, 1998, beschrieben.

Die Herstellung der erfindungsgemäß zu verwendenden Beschichtungsstoffe, insbesondere der ETL, weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen oder Extruder und Dispergieren der resultierenden Mischung in Wasser.

Die erfindungsgemäße Beschichtung weist neben ihrer hervorragenden Korrosionsschutzwirkung auch noch eine vorzügliche Überlackierbarkeit mit anderen Beschichtungsstoffen wie flüssigen konventionellen oder wäßrigen oder festen Füllern, Basislacken und/oder Klarlacken auf. Hierbei kann der erfindungsgemäß zu verwendende Beschichtungsstoff ohne vorhergehende thermische Härtung als Naßschicht überlackiert werden, wonach die Naßschicht gemeinsam mit den hierauf applizierten Schichten eingebrannt wird (Naß-in-naßVerfahren). Die resultierenden erfindungsgemäßen Mehrschichtlackierungen weisen eine hervorragende Zwischenschichthaftung auf.

Ein weiterer Anwendungsbereich für die erfindungsgemäße Beschichtung ist die Beschichtung von Coils, wobei hier insbesondere erfindungsgemäße Beschichtungen mit vergleichsweise niedrigen Schichtdicken, beispielsweise < 10 µm, für sogenannte presealed oder preprimed Coils Verwendung finden.

### Beispiele und Vergleichsversuche

### Herstellbeispiel 1

### Die Herstellung eines erfindungsgemäß zu verwendenden Vernetzungsmittels (D)

In einem Reaktor, der mit einem Rührer, Rückflußkühler, Innenthermometer und Inertgaseinleitung ausgestattet ist, werden 10552 Teile Isomere und höherfunktionelle Oligomere auf Basis von 4,4'-Diphenylmethandiisocyanat mit einem NCO-Equivalentgewicht von 135 g/eq (Lupranat®, Fa. BASF/ Deutschland; NCO-Funktionali- tät ca. 2,7; Gehalt an 2,2'- und 2,4'-Diphenylmethandiisocyanat unter 5%) unter Stickstoffatmosphäre vorgelegt. Man gibt 18 Teile Dibutylzinndilaurat zu und tropft 9498 Teile Butyldiglykol mit einer solchen Geschwindigkeit zu, daß die Produkttemperatur unter 60°C bleibt. Gegebenenfalls muß gekühlt werden. Nach Ende der Zugabe wird die Temperatur weitere 60 min bei 60°C gehalten und ein NCO-Equivalentgewicht von 1120 g/eq bestimmt (bezogen auf Festanteile). Nach Anlösung in 7768 Teilen Methylisobutylketon werden 933 Teile geschmolzenes Trimethylolpropan in einer solchen Geschwindigkeit zugegeben, daß eine Produkttemperatur von 100°C nicht überschritten wird. Nach Zugabeende läßt man weitere 60 min nachreagieren. Bei der nachfolgenden Kontrolle sind keine NCO-Gruppen mehr nachweisbar. Man kühlt auf 65°C ab und verdünnt gleichzeitig mit 965 Teilen n-Butanol und 267 Teilen Methylisobutylketon.

Der Feststoffgehalt liegt bei 70,1 % (1 h bei 130°C).

### Herstellbeispiel 2

### Die Herstellung eines Vorproduks (Lösung von Diethylentriamin-diketimin in Methylisobutylketon)

Aus einer 70-gewichtsprozentigen Lösung von Diethylentriamin in Methylisobutylketon wird bei 110 - 140°C das Reaktionswasser azeotrop ausgekreist. Anschließend wird mit Methylisobutylketon verdünnt bis die Lösung ein Aminequivalentgewicht von 124 aufweist.

### Herstellbeispiel 3

### Die Herstellung einer erfindungsgemäß zu verwendenden Mischung aus Bindemittel (A), Bismutsalz (B) und Vernetzungsmittel (C)

In einem Reaktor, ausgerüstet mit einem Rührer, Rückflußkühler, Innenthermometer und einer Inertgaseinleitung, wurden 5.851 Gewichtsteile Epoxidharz auf Basis von Bisphenol A mit einem Epoxyäquivalentgewicht (EEW) von 188 zusammen mit 1.332 Gewichtsteilen Bisphenol A, 503 Gewichtsteilen Phenol (wasserfrei) und 406 Gewichtsteilen Xylol unter Rühren unter einer Stickstoffatmosphäre auf 125 °C aufgeheizt. Die resultierende Mischung wurde während 15 Minuten bei dieser Temperatur weiter gerührt und anschließend auf 130 °C aufgeheizt. Bei dieser Temperatur gab man 22 Gewichtsteile N,N-Dimethylbenzylamin hinzu. Die resultierende Mischung wurde bei 130 °C solange weiter gerührt, bis ein EEW von 851 erreicht war.

Hiernach wurde eine Mischung aus 7.066 Gewichtsteilen des Vernetzungsmittels (C) des Herstellbeispiels 1 und 72 Gewichtsteilen eines handelsüblichen Antikrateradditivs auf der Basis eines Polyethers (von der Firma Byk Chemie) hinzugegeben, wonach die resultierende Mischung während 30 Minuten bei 100°C gehalten wurde. Anschließend wurden 195 Gewichtsteile Butylglykol und 1.209 Gewichtsteile Isobutanol zugesetzt.

Unmittelbar anschließend wurde eine Mischung aus 434 Gewichtsteilen des Vorprodukts gemäß Herstellbeispiel 2 und 482 Gewichtsteilen Methylethanolamin zugesetzt, wonach das resultierende Reaktionsgemisch während 30 Minuten bei 100 °C gehalten wurde. Anschließend wurde dessen Temperatur auf 105 °C erhöht, und es wurden 147 Gewichtsteile N,N-Dimethylaminopropylamin hinzugegeben.

75 Minuten nach der Aminzugabe wurden 932 Gewichtsteile einer handelsüblichen Propylenglykolverbindung (Plastilit® 3060 der Firma BASF Aktiengesellschaft) zugesetzt. Die resultierende Mischung wurde mit einer handelsüblichen Mischung aus 1-Phenoxy-2-propanol und 2-Phenoxy-1-propanol (von der Firma BASF Aktiengesellschaft) verdünnt und gleichzeitig rasch auf 85 °C abgekühlt.

Zu dieser Mischung wurden bei 85 °C langsam 719 Gewichtsteile einer 75 Gew.-% igen Lösung von Bismut (III)-2-ethylhexanoat in 2-Ethylhexansäure hinzugegeben, wonach die resultierende Mischung bei 85 °C solange gerührt wurde, bis sie homogen war.

### Beispiel 1 und Vergleichsversuche V1 und V2

### Die Herstellung eines erfindungsgemäß zu verwendenden wäßrigen Beschichtungsstoffs (Beispiel 1) und zweier nicht erfindungsgemäß zu verwendender wäßriger Beschichtungsstoffe (Vergleichsversuche V1 und V2)

Für die Durchführung des Beispiels 1 und der Vergleichsversuche V1 und V2 wurde die Mischung des Herstellbeispiels 3 in drei gleiche Teile geteilt, um drei Dispersionen mit unterschiedlichen Säuren für die Neutralisation herzustellen.

Zu diesem Zweck wurden jeweils 5.054 Gewichtsteile der Mischung gemäß Herstellbeispiels 3 in drei separate Dispergiergefäße überführt.

Bei Beispiel 1 wurde die Mischung mit 71,6 Gewichtsteilen Ameisensäure (85 %ig in Wasser) und 2.434 Gewichtsteilen deionisiertem Wasser versetzt.

Bei dem Vergleichsversuch V1 wurde die Mischung mit 79,5 Gewichtsteilen Eisessig und 2.426 Gewichtsteilen deionisiertem Wasser versetzt.

Bei dem Vergleichsversuch V2 wurde die Mischung mit 144,5 Gewichtsteilen Milchsäure (88 %ig in Wasser) und 2.361 Gewichtsteilen deionisiertem Wasser versetzt.

Die resultierenden drei Dispersionen wurden während 20 Minuten homogenisiert, wonach jede mit 4.253 Gewichtsteilen deionisiertem Wasser in kleinen Portionen weiter verdünnt wurde. Die in den Dispersionen noch enthaltenen flüchtigen Lösemittel wurden durch Destillation im Vakuum entfernt und durch gleiche Mengen an deionisiertem Wasser ersetzt. Es resultierten die erfindungsgemäß zu verwendende Dispersion D1 des Beispiels 1 und die nicht erfindungsgemäß zu verwendenden Dispersionen D2 und D3 der Vergleichsversuch V 1 von V2.

### Die Dispersionen wiesen die folgenden Kennzahlen auf:

### Dispersion D1:

| | |
|---|---|
| Feststoffgehalt: | 33 Gew.-% (eine Stunde bei 130 °C) |
| | 29,5 Gew.-% (0,5 Stunden bei 180°C) |
| Basengehalt: | 0,79 Milliäquivalente/g Festkörper (130 °C) |
| Säuregehalt: | 0,60 Milliäquivalente/g Festkörper (130 °C) |
| pH-Wert: | 5,7 |
| Teilchengröße: | 105 nm (Massenmittel aus Photonen-Korrelations-Spektroskopie) |

### Dispersion D2:

| | |
|---|---|
| Feststoffgehalt: | 32,8 Gew.-% (eine Stunde bei 130 °C) |
| | 29,3 Gew.-% (0,5 Stunden bei 180°C) |
| Basengehalt: | 0,78 Milliäquivalente/g Festkörper (130°C) |
| Säuregehalt: | 0,59 Milliäquivalente/g Festkörper (130°C) |
| pH-Wert: | 5,7 |
| Teilchengröße: | 146 nm (Massenmittel aus Photonen-Korrelations-Spektroskopie) |

### Dispersion D3:

| | |
|---|---|
| Feststoffgehalt: | 33,1 Gew.-% (eine Stunde bei 130 °C) |
| | 29,5 Gew.-% (0,5 Stunden bei 180 °C) |
| Basengehalt: | 0,79 Milliäquivalente/g Festkörper (130°C) |
| Säuregehalt: | 0,58 Milliäquivalente/g Festkörper (130°C) |
| pH-Wert: | 5,8 |
| Teilchengröße: | 106 nm (Massenmittel aus Photonen-Korrelations-Spektroskopie) |

### Beispiel 2 und Vergleichsversuche V3 und V4

### Der Herstellung einer erfindungsgemäßen Beschichtung (Beispiel 2) und zweier nicht erfindungsgemäßer Beschichtungen (Vergleichsversuche V3 und V4)

Die Dispersion D1 des Beispiels 1 (Beispiel 2) und die Dispersionen D2 und D3 der Vergleichsversuche V1 und V2 (Vergleichsversuche V3 und V4) wurden mittels einer Rakel als Korrosionsschutzprimer direkt auf blanke Stahlprüftafeln (Bo) der Firma Chemetall und zu Zwecken der visuellen Beurteilung auf Glastafeln (190mm x 105mm) aufgetragen. Die resultierenden Naßschichten wurden unmittelbar nach ihrer Applikation während 20 Minuten bei 170°C eingebrannt.

Die resultierenden Beschichtungen wurden visuell beurteilt. Von den Beschichtungen wurden Proben entnommen, pulverisiert und einer Röntgenbeugungsuntersuchung nach dem Debye-Scherrer-Verfahren unterzogen. Es wurde geprüft, ob die erhaltenen Röntgenspektren die eingangs beschriebenen sechs charakteristischen Linien des metallischen Bismuts aufwiesen. Die Tabelle 1 gibt einen Überblick über die erhaltenen Versuchsergebnisse.

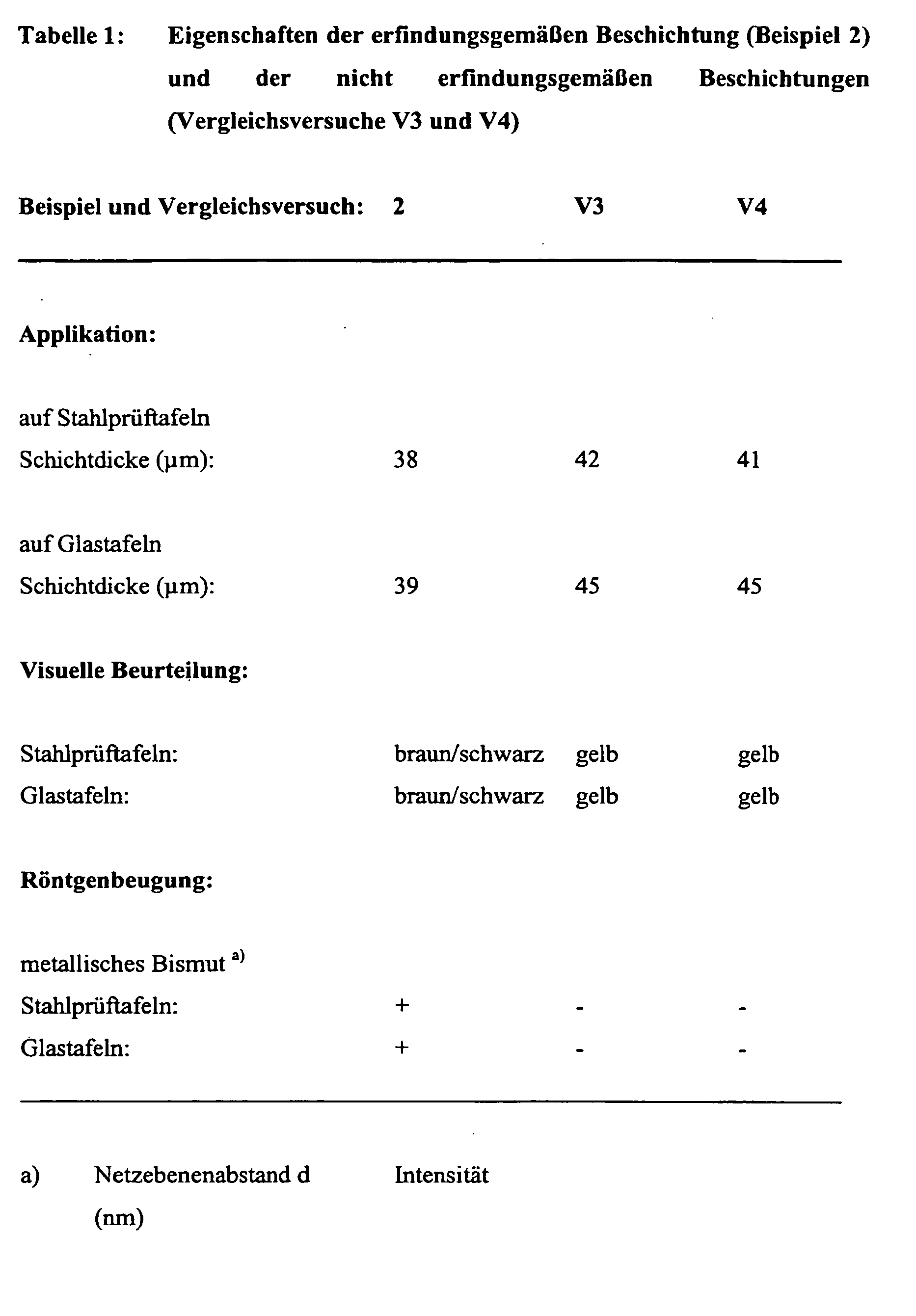

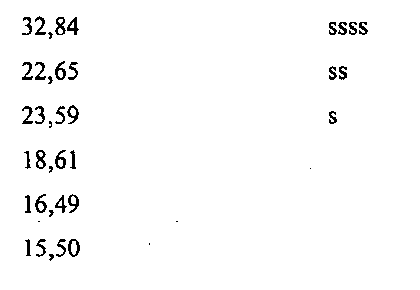

Die Versuchsergebnisse der Tabelle 1 belegen, daß nur die erfindungsgemäß zu verwendende Dispersion D1 des Beispiels 1 (Ameisensäureneutralisation) Beschichtungen mit metallischem Bismut lieferte. Diese waren in ihrer Korrosionsschutzwirkung den Beschichtungen der Vergleichsversuche V3 und V4 überlegen (vgl. Tabelle 3).

### Beispiel 3 und Vergleichsversuche V5 und V6

### Der Herstellung einer erfindungsgemäßen Beschichtung (Beispiel 3) und zweier nicht erfindungsgemäßer Beschichtungen (Vergleichsversuche V5 und V6) durch Elektrotauchlackierung

Die erfindungsgemäße ETL 1 wurde durch Verdünnung der Dispersion D1 des Beispiels 1 mit deionisiertem Wasser hergestellt (Feststoffgehalt: 15 Gew.-%; 0,5 Stunden bei 180°C).

Die nicht erfindungsgemäßen ETL 2 und 3 wurden durch Verdünnung der Dispersionen D2 und D3 der Vergleichsversuche V1 und V2 mit deionisiertem Wasser hergestellt (Feststoffgehalt: 15 Gew.-%; 0,5 Stunden bei 180 °C).

Die ETL 1 bis 3 wurden nach einem Tag Alterung bei Raumtemperatur auf kathodisch geschalteten Stahlprüftafeln mit 15 Ohm Vorwiderstand abgeschieden. Es wurden blanke Stahlprüftafeln (Bo) und wassergespülte, zinkphosphatierte Stahlprüftafeln (Bo26S W42 OC) der Firma Chemetall verwendet. Die Abscheidezeit betrug zwei Minuten. Die Badtemperatur lag bei 32 °C. Die Abscheidespannung wurde so gewählt, daß eine Schichtdicke der eingebrannten Beschichtungen von 17 bis 21µm resultierte. Die abgeschiedenen Naßschichten wurden mit deionisiertem Wasser abgespült und während 20 Minuten bei 170 °C eingebrannt. Die Tabelle 2 gibt einen Überblick über die Zusammensetzung der ETL 1 bis 3, der Bedingungen für die Abscheidung, die erhaltenen Schichtdicken und darüber, ob die resultierenden Beschichtungen metallisches Bismut enthielten oder nicht.

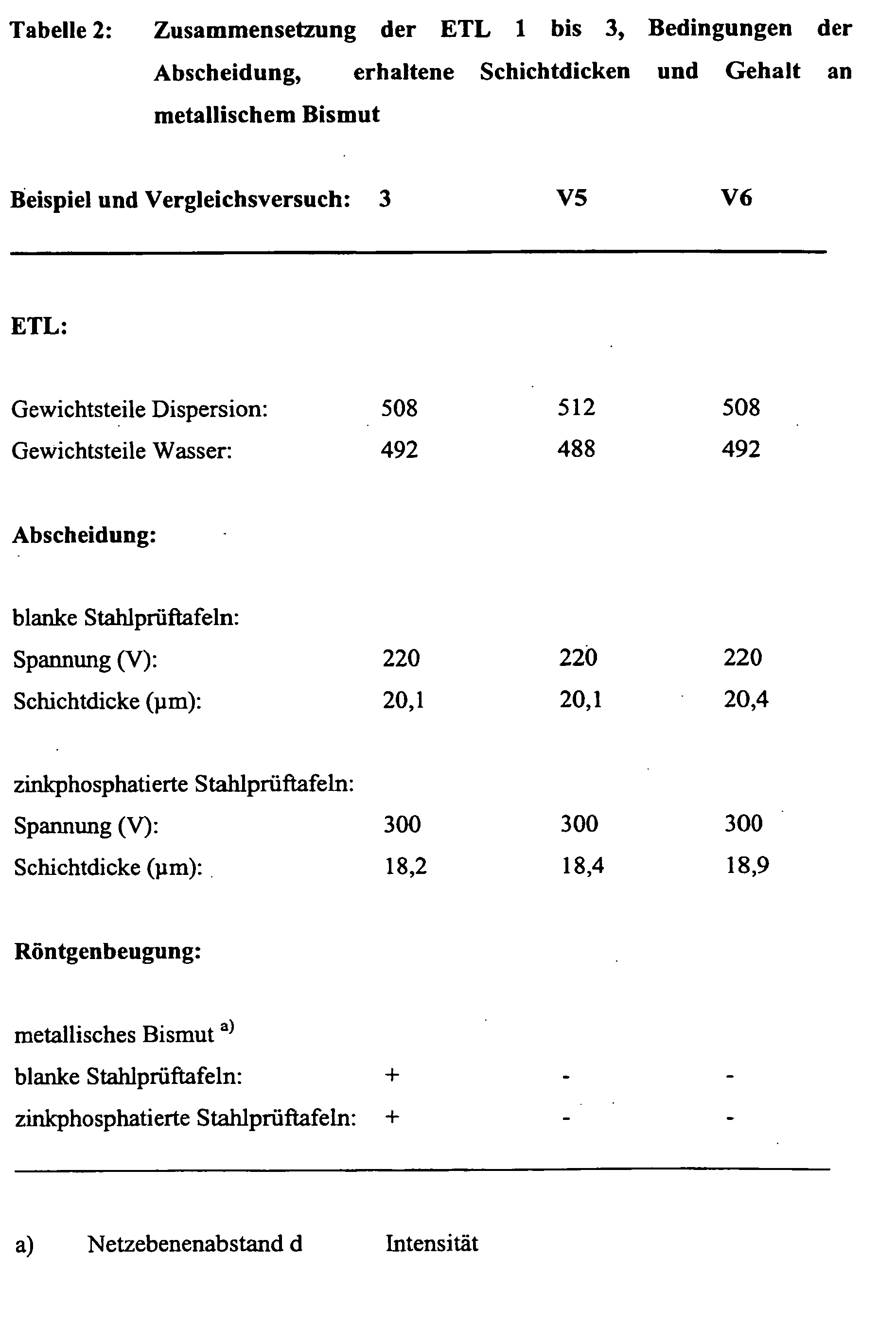

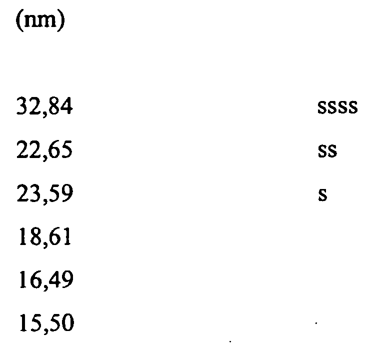

Die Versuchsergebnisse der Tabelle 2 belegen, daß nur die erfindungsgemäß zu verwendende Dispersion D1 des Beispiels 1 (Ameisensäureneutralisation) als ETL Beschichtungen mit metallischem Bismut lieferte.

### Beispiele 4 und 5 und Vergleichsversuche V7 bis V10

### Die Korrosionsschutzwirkung der erfindungsgemäßen Beschichtungen der Beispiele 2 und 3 (Beispiele 4 und 5) und der nicht erfindungsgemäßen Beschichtungen der Vergleichsversuche V 3 bis V6 (Vergleichsversuche V7 bis V10)

Bei Beispiel 4 wurde die Korrosionsschutzwirkung der erfindungsgemäßen Beschichtung des Beispiels 2 auf blanken Stahlprüftafeln ermittelt.

Bei Beispiel 5 wurde die Korrosionsschutzwirkung der erfindungsgemäßen Beschichtungen des Beispiels 3 auf blanken und zinkphosphatierten Stahlprüftafeln ermittelt.

Bei Vergleichsversuch V7 wurde die Korrosionsschutzwirkung der nicht erfindungsgemäßen Beschichtung des Vergleichsversuchs V3 auf blanken Stahlprüftafeln ermittelt.

Bei Vergleichsversuch V8 wurde die Korrosionsschutzwirkung der nicht erfindungsgemäßen Beschichtung des Vergleichsversuchs V4 auf blanken Stahlprüftafeln ermittelt.

Bei Vergleichsversuch V9 wurde die Korrosionsschutzwirkung der nicht erfindungsgemäßen Beschichtungen des Vergleichsversuchs V5 auf blanken und zinkphosphatierten Stahlprüftafeln ermittelt.

Bei Vergleichsversuch V10 wurde die Korrosionsschutzwirkung der nicht erfindungsgemäßen Beschichtungen des Vergleichsversuchs V6 auf blanken und zinkphosphatierten Stahlprüftafeln ermittelt.

Die Ergebnisse der Messungen finden sich in der Tabelle 3.

**Tabelle 3: Die Korrosionsschutzwirkung der erfindungsgemäßen Beschichtungen der Beispiele 2 und 3 (Beispiele 4 und 5) und der nicht erfindungsgemäßen Beschichtungen der Vergleichsversuche V 3 bis V6 (Vergleichsversuche V7 bis V10)**

| **Beispiel und Vergleichsversuch:** | **4** | **5** | **V7** | **V8** | **V9** | **V10** |
|---|---|---|---|---|---|---|
| **360 Stunden** | | | | | | |
| **Salzsprühnebelbelastung ^{a)}:** | | | | | | |
| Unterwanderung am Ritz ^{b)} (mm): | 1,1 | 1,2 | 1,9 | 1,8 | 1,8 | 2,0 |
| Flächenrost ^{c)}: | 1 | 1 | 1 | 1 | 1 | 1 |

| **Klimawechseltest ^{d)}:** | | | | | | |
|---|---|---|---|---|---|---|
| Unterwanderung am Ritz ^{b)} (mm): | - | 1,9 | - | - | 2,3 | 2,3 |
| Flächenrost ^{c)}: | - | 1 | - | - | 1 | 1 |

| | | | | | | |
|---|---|---|---|---|---|---|
| a) 360 Stunden währende Behandlung mit Salzsprühnebel nach ASTM B 117 von Beschichtungen auf blanken Stahlprüftafeln; b) Unterwanderung (mm) = [Gesamteunterwanderung (mm) - Ritzstärke (mm)]/2; c) 0 = bester Wert; 5 = schlechtester Wert; d) 10 Zyklen Klimawechseltest nach VDA von Beschichtungen auf zinkphosphatierten Stahlprüftafeln; | | | | | | |

Die Ergebnisse der Tabelle 3 untermauern die überlegene Korrosionsschutzwirkung der erfindungsgemäßen Beschichtungen.

## Patentansprüche

1. Beschichtung, herstellbar aus einem thermisch härtbaren, wässrigen Beschichtungsstoff auf organischer Basis, enthaltend, bezogen auf ihre Gesamtmenge, 0,01 bis 2,5 Gew.-% kolloidal verteiltes metallisches Bismut.

2. Beschichtung nach Anspruch 1, **dadurch gekennzeichnet, dass** sie eine Schichtdicke von 2,0 bis 200 µm aufweist.

3. Beschichtung nach Anspruch 1 oder 2, **dadurch gekennzeichnet, dass** der thermisch härtbare, wäßrige Beschichtungsstoff durch Spritzen, Rakeln, Streichen, Gießen, Tauchen, Tränken, Träufeln oder Walzen auf elektrisch leitfähigen und elektrisch nicht leitfähigen Substraten abgeschieden wird.

4. Beschichtung nach Anspruch 1 oder 2, **dadurch gekennzeichnet, dass** der thermisch härtbare, wäßrige Beschichtungsstoff kataphoretisch auf elektrisch leitfähigen Substraten abgeschieden wird.

5. Beschichtung nach einem der Ansprüche 1 bis 4, **dadurch gekennzeichnet, dass** der thermisch härtbare, wäßrige Beschichtungsstoff
A) mindestens ein wasserlösliches oder -dispergierbares, hydroxylgruppenhaltiges, mit Ameisensäure neutralisiertes oligomeres und/oder polymeres Polyamin als Bindemittel,
B) mindestens ein Salz von Bismut und mindestens einer Alkanmonocarbonsäure mit mindestens 5 Kohlenstoffatomen im Molekül als Katalysator der thermischen Vernetzung,
C) mindestens ein blockiertes Polyisocyanat als Vernetzungsmittel und
D) mindestens einen Zusatzstoff enthält.

6. Beschichtung nach Anspruch 5, **dadurch gekennzeichnet, dass** das Polyamin (A) und primäre, sekundäre, tertiäre und/oder quartäre Ammoniumgruppen enthält.

7. Beschichtung nach Anspruch 5 oder 6, **dadurch gekennzeichnet, dass** es sich bei dem Polyamin (A) um ein Aminoepoxidharz handelt.

8. Beschichtung nach einem der Ansprüche 5 bis 7, **dadurch gekennzeichnet, dass** es sich bei der Alkanmonocarbonsäure um n-Valeriansäure, lsovaleriansäure, 2-Methylbuttersäure, Pivalinsäure, n-Hexansäure, n-Heptansäure, n-Octansäure, 2-Ethylhexansäure, Nonansäure, Caprinsäure, Neodecansäure und/oder Laurinsäure handelt.

9. Beschichtung nach einem der Ansprüche 5 bis 8, **dadurch gekennzeichnet, dass** das Bismutsalz in Lösung in mindestens einer Alkanmonocarbonsäure mit mindestens fünf Kohlenstoffatomen im Molekül vorliegt.

10. Verwendung der Beschichtung gemäß einen der Ansprüche 1 bis 9 als Korrosionsschutzschicht auf metallischen Substraten.

## Claims

1. Coating preparable from a thermally curable, organic-based aqueous coating material comprising, based on its total amount, from 0.01 to 2.5% by weight of colloidally dispersed metallic bismuth.

2. Coating according to Claim 1, **characterized in that** it has a film thickness of from 2.0 to 200 µm.

3. Coating according to Claims 1 or 2, **characterized in that** the thermally curable aqueous coating material is deposited by spraying, knife coating, brushing, flow coating, dipping, impregnating, trickling or rolling on electrically conductive and electrically nonconductive substrates.

4. Coating according to Claims 1 or 2, **characterized in that** the thermally curable aqueous coating material is deposited cataphoretically on electrically conductive substrates.

5. Coating according to one of Claims 1 to 4, **characterized in that** the thermally curable aqueous coating material comprises
A) at least one water-soluble or water-dispersible, hydroxyl-containing, oligomeric and/or polymeric polyamine as binder, neutralized with formic acid,
B) at least one salt of bismuth and at least one alkanemonocarboxylic acid having at least 5 carbon atoms in the molecule, as thermal crosslinking catalyst,
C) at least one blocked polyisocyanate as crosslinking agent, and
D) at least one additive.

6. Coating according to Claim 5, **characterized in that** the polyamine (A) and contains primary, secondary, tertiary and/or quaternary ammonium groups.

7. Coating according to Claim 5 or 6, **characterized in that** the polyamine (A) is an amino epoxy resin.

8. Coating according to Claims 5 to 7, **characterized in that** the alkanemonocarboxylic acid is n-valeric acid, isovaleric acid, 2-methylbutyric acid, pivalic acid, n-hexanoic acid, n-heptanoic acid, n-octanoic acid, 2-ethylhexanoic acid, nonanoic acid, capric acid, neodecanoic acid and/or lauric acid.

9. Coating according to one of Claims 5 to 8, **characterized in that** the bismuth salt is present in solution in at least one alkanemonocarboxylic acid having at least five carbon atoms in the molecule.

10. Use of the coating according to one of Claims 1 to 9 as a corrosion protection layer on metallic substrates.

## Revendications

1. Revêtement pouvant être fabriqué à partir d'un matériau de revêtement aqueux, pouvant subir un durcissement thermique et à base organique, contenant, par rapport à son poids total, de 0,01 à 2,5 % en poids de bismuth métallique à distribution colloïdale.

2. Revêtement selon la revendication 1, **caractérisé en ce qu'**il présente une épaisseur de feuil de 2,0 à 200 µm.

3. Revêtement selon la revendication 1 ou 2, **caractérisé en ce que** le matériau de revêtement aqueux, pouvant subir un durcissement thermique, est déposé au pistolet, à la racle, au pinceau, par coulée, au trempé, par imprégnation, goutte à goutte ou aux cylindres, sur des subjectiles conducteurs de l'électricité ou non conducteurs de l'électricité.

4. Revêtement selon la revendication 1 ou 2, **caractérisé en ce que** le matériau de revêtement aqueux, pouvant subir un durcissement thermique, est déposé par cataphorèse sur des subjectiles conducteurs de l'électricité.

5. Revêtement selon l'une des revendications 1 à 4, **caractérisé en ce que** le matériau de revêtement aqueux, pouvant subir un durcissement thermique, contient
A) au moins une polyamine oligomère et/ou polymère, soluble ou dispersible dans l'eau, contenant des groupes hydroxyle, neutralisée par de l'acide formique, servant de liant,
B) au moins un sel de bismuth, et au moins un acide alcanemonocarboxylique ayant au moins 5 atomes de carbone dans sa molécule, en tant que catalyseur de la réticulation thermique,
C) au moins un polyisocyanate bloqué, en tant qu'agent de réticulation, et
D) au moins un additif.

6. Revêtement selon la revendication 5, **caractérisé en ce que** la polyamine (A) contient des groupes ammonium primaires, secondaires, tertiaires et/ou quaternaires.

7. Revêtement selon la revendication 5 ou 6, **caractérisé en ce que**, pour ce qui concerne la polyamine (A), il s'agit d'un sel aminoépoxydique.

8. Revêtement selon l'une des revendications 5 à 7, **caractérisé en ce que**, pour ce qui concerne l'acide alcanemonocarboxylique, il s'agit de l'acide n-valérique, de l'acide isovalérique, de l'acide 2-méthylbutyrique, de l'acide pivalique, de l'acide n-hexanoïque, de l'acide n-heptanoïque, de l'acide n-octanoïque, de l'acide 2-éthylhexanoïque, de l'acide nonanoïque, de l'acide caprique, de l'acide néodécanoïque et/ou de l'acide laurique.

9. Revêtement selon l'une des revendications 5 à 8, **caractérisé en ce que** le sel de bismuth est présent en solution dans au moins un acide alcanemonocarboxylique ayant dans sa molécule au moins cinq atomes de carbone.

10. Utilisation du revêtement selon l'une des revendications 1 à 9 en tant que couche anticorrosion sur des subjectiles métalliques.
